# EUROPEAN PATENT SPECIFICATION

(11) **EP 3 602 881 B1**
(45) Date of publication and mention of the grant of the patent: **30.10.2024**
(21) Application number: 17714198.3
(22) Date of filing: 28.03.2017
(51) Int. Cl.: H04L 1/1607, H04L 1/00, H04L 1/12

(54) **ACKNOWLEDGMENT SIGNALLING IN COMMUNICATIONS**
BESTÄTIGUNGSSIGNALISIERUNG IN DER KOMMUNIKATION
SIGNALISATION D'ACCUSÉ DE RÉCEPTION DANS DES COMMUNICATIONS

(43) Date of publication of application: 05.02.2020
(73) Proprietor: Nokia Solutions and Networks Oy, 02610 Espoo (FI)
(72) Inventor: BERARDINELLI, Gilberto, 9000 Aalborg (DK); KHOSRAVIRAD, Saeed Reza, 50043 Wroclaw (PL); PEDERSEN, Klaus Ingemann, 9000 Aalborg (DK); FREDERIKSEN, Frank, 9270 Klarup (DK)
(74) Representative: Script Intellectual Property LLP
(86) International application number: PCT/EP2017/057343
(87) International publication number: WO 2018/177513

(56) References cited:
- EP-A1- 2 663 007
- FUJITSU: "DL Scheduling and UL control information for URLLC", vol. RAN WG1, no. Spokane, USA; 20170116 - 20170120, 16 January 2017 (2017-01-16), XP051208182, Retrieved from the Internet <URL:http://www.3gpp.org/ftp/Meetings_3GPP_SYNC/RAN1/Docs/> [retrieved on 20170116]

## Description

### Field of the Invention

This invention relates generally to communications systems, and more particularly to acknowledgment signalling used in such systems.

### Background of the Invention

In digital communications systems, methods are provided for triggering retransmissions in the event of detecting errors or the failed reception of data. One such method employed in cellular communications is by sending acknowledgment signals, for example a Hybrid Automatic Repeat reQuest (HARQ). HARQ may be considered a combination of an Automatic Repeat reQuest (ARQ) and forward error correction (FEC.)

Traditionally, HARQ methods rely on Boolean positive and negative acknowledgement signals (ACK/NACK), which respectively signal successful and unsuccessful receipt of the transmitted data. If unsuccessful, a NACK feedback message may trigger a retransmission. A retransmission can be performed by sending an identical copy of the failed packet, or a different redundancy version (RV) of the failed packet.

In terms of HARQ methods used with the Long-Term Evolution (LTE) standard, the RV number to be used in each retransmission is defined by the LTE standard. For the downlink, the specific RV to be used is selected by the base station and signalled using downlink control information. For the uplink, the specific RV to be used is implicitly derived through the retransmission number for most cases of standard synchronous and non-adaptive uplink HARQ.

Several research proposals have outlined the potential of using enriched feedback information for optimizing the retransmissions in terms of resource utilization. Such proposals have been discussed in relation to 5G New Radio (NR). For example, a multi-bit NACK can be used for signalling decoder state information (DSI) which informs the transmitter of the amount of extra redundancy required for decoding the packet. If a large transport block is segmented into several code blocks, enriched feedback can instead index the failed code blocks, thus avoiding a retransmission of the entire transport block.

Such feedback may be used by, and for, user equipment (UE) experiencing good coverage conditions that can properly detect the enriched information. Such UEs may also be operating with large transport blocks, where multi-bit feedback may have significant potential. Cell-edge UEs can instead use Boolean feedback, which is likely to be detected even in the case of very poor channel conditions. Nevertheless, UEs with good coverage may incur unexpected SNR degradation (due for example to shadowing or burst interference) which may make it difficult to correctly detect the multi-bit feedback. This may lead to unnecessary retransmissions and/or increased likelihood of outages. The base station may react to such situations by requesting a more robust Boolean feedback, but this copes inefficiently with rapidly varying channel conditions.

In fourth generation (4G) radio access technologies, the HARQ feedback is traditionally Boolean.

In the LTE downlink, an ACK is coded as 111, and a NACK as 000 (three bits each). The Physical Hybrid ARQ Indicator Channel (PHICH) use Binary Phase-Shift Keying (BPSK) modulation, so three modulation symbols are generated for each feedback message. Next, these three modulation symbols are multiplied by the orthogonal cover, which has the spreading factor (SF) of four for the normal cyclic prefix, resulting in a total of twelve symbols.

In the LTE uplink, the feedback message is multiplied by a phase-rotated sequence of length twelve, and then by a cover sequence of length four. The feedback message is transmitted over an entire one millisecond sub-frame (two slots), in opposite positions of the allocated bandwidth in the two slots. Such design is aimed at strengthening the reliability of the feedback transmission with a large redundancy, such that it can be retrieved in a wide set of channel conditions.

EP 2663007 discloses a method for transmission of ACK/NACK messages.

### Summary

The invention is set forth in the claims.

### Brief Description of the Drawings

Figure 1 is a diagram illustrating an example wireless communication system, which is useful for understanding embodiments of the invention;
Figure 2 is a block diagram showing functional components of user equipment (UE) according to an arrangement;
Figure 3 is a block diagram showing functional components of a base station (BS) according to an arrangement;
Figure 4 is a schematic diagram illustrating a conventional HARQ feedback method, which is useful for understanding embodiments of the invention;
Figure 5 is a schematic diagram showing states of a multi-level or multi-dimensional feedback message scheme, according to an embodiment of the invention;
Figure 6 is a constellation diagram showing second level states of the Figure 5 feedback message scheme, according to an embodiment of the invention;
Figure 7 is a constellation diagram showing the third level states of the Figure 5 feedback message scheme, according to an embodiment of the invention;
Figure 8 is a flow diagram showing a method for decoding a feedback message, encoded using the Figure 5 feedback scheme, according to an embodiment of the invention;
Figure 9 is a constellation diagram showing second level states of a further multi-dimensional feedback message scheme, according to another embodiment of the invention;
Figure 10 is a flow diagram showing a method for decoding a feedback message, encoded using the Figure 5 feedback scheme, according to another embodiment of the invention;
Figure 11 is a flow diagram showing a method of encoding a multi-dimensional feedback message, according to an embodiment of the invention; and
Figure 12 is a schematic diagram showing states of a multi-level or multi-dimensional feedback message scheme, according to another embodiment of the invention.

### Detailed Description of Preferred Embodiments

Embodiments herein relate to wireless data communications between remote devices, for example base stations and user equipment in a cellular communications system. It should be understood however that the systems and methods described are applicable to any form of communications system where feedback signals may indicate whether or not data packets have been correctly received. In the context of this description, the term signals, data signals, messages and data messages are considered interchangeable. An acknowledgment signal may be either a positive or a negative form of acknowledgment.

In overview, methods and systems are described in relation to the HARQ feedback methodology, using what may be termed multi-resolution feedback between the receiver of a data signal and, for example, the transmitter of the data signal. However, the multi-resolution technique is applicable to any feedback or acknowledgment method for creating separation or polarisation between states that contain information requiring separation. Indeed, the technique is applicable outside of ACK and NACK feedback signalling, where different levels of information may be embedded in a signal.

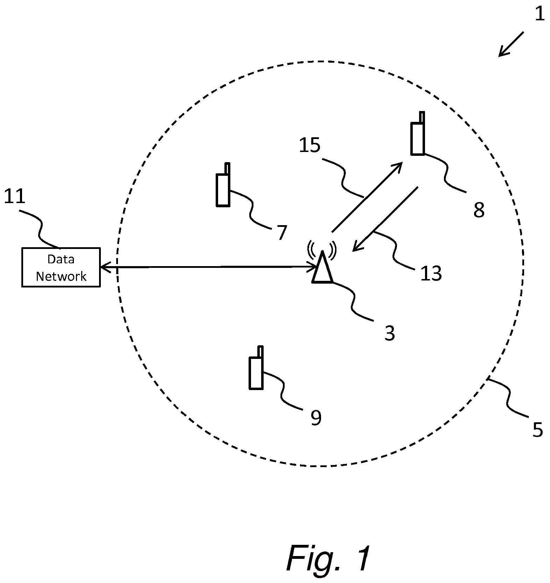

Referring to Figure 1, there is shown a communications system 1, which may be part of a larger network, comprising a base station (BS) 3 which has a defined coverage cell 5 within which may be one or more user equipment (UEs) 7, 8, 9. Depending on the network type, the BS 1 may alternatively be known as a NodeB, an Enhanced NodeB (eNodeB) or access point (AP). For convenience, the term BS 3 is used herein to describe any form of network infrastructure component that provides wireless access to remote terminals, such as the UEs 7, 8, 9.

The BS 3 may be in communication with a data network 11, for example an IP network, which may be the Internet, a private network or a different form of data network. The BS 3 may also be connected to one or more other BSs (not shown) in geographically separate locations.

The UEs 7, 8, 9 may be any form of equipment that may wirelessly communicate with the BS 3, whether the UE is a mobile device such as a mobile telephone, smartphone, tablet computer, or other form of equipment such as a desktop computer, laptop or other terminal with a wireless transceiver. Communication from a particular UE (e.g. the UE 8) and the BS 3 is performed on an uplink 13, and communication from the BS to the UE is performed on a downlink 15.

The BS 3 may provide access to voice telephony services. The BS 3 may also provide access to mobile broadband services for the UEs 7, 8, 9 within its coverage cell 5. Communication between the UEs 7, 8, 9 and the BS 3 may be by means of known standard or technology, including, but not limited to, 3G, 4G, LTE, and/or WiMAX. Future standards and technologies, for example 5G, may also employ the methods and systems disclosed herein.

The BS 3 and one or more of the UEs 7, 8, 9 are configured to support so-called HARQ methodologies which embodiments herein are based on.

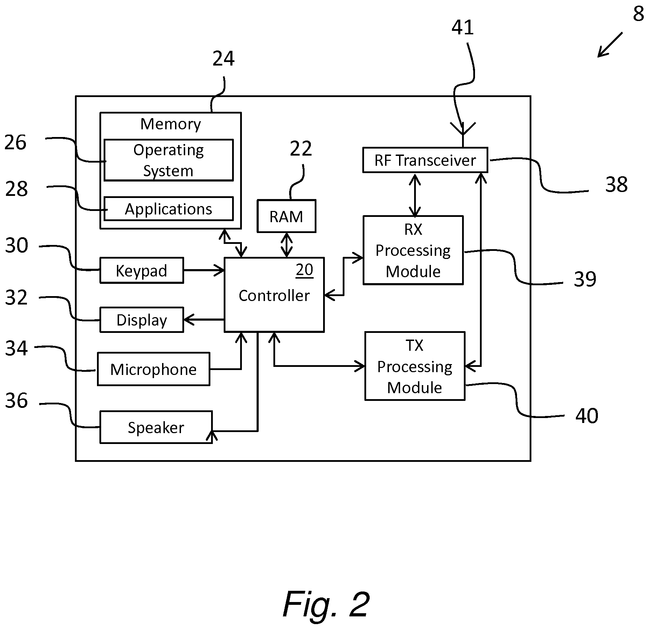

Figure 2 shows a schematic diagram of components of one of the UEs 8, but the same or similar components may be provided in the other UEs 7, 9. The UE 8 may have a controller 20, RAM 22, a memory 24, a keypad 30, a display 32, a microphone 34 and a speaker 36. Additionally, the UE 8 may have at least one RF transceiver 38, a t least one receiver (RX) processing module 39, a t least one transmitter (TX) processing module 40 and at least one RF antenna 41. The controller 20 may be connected to each of the other components as shown in order to control operation thereof.

The memory 24 may be a non-volatile memory such as read only memory (ROM), a hard disk drive (HDD) or a solid state drive (SSD). The memory 24 stores, amongst other things, an operating system 26 and may store software applications 28. In this example, the memory 24 may store a software application for encoding and decoding HARQ feedback messages in association with, respectively, the TX processing module 40 and the RX processing module 39. The RAM 22 is used by the controller 20 for the temporary storage of data. The operating system 26 may contain code which, when executed by the controller 20 in conjunction with the RAM 22, controls operation of each of the hardware components of the UE 8.

The controller 20 may take any suitable form. For instance, it may be a microcontroller, plural microcontrollers, a processor, or plural processors.

In some embodiments, the UE 8 may also be associated with external software applications not stored on the UE. These may be applications stored on a remote server device and may run partly or exclusively on the remote server device. These applications may be termed cloud-hosted applications. The UE 8 may be in communication with the remote server device in order to utilize the software application stored there.

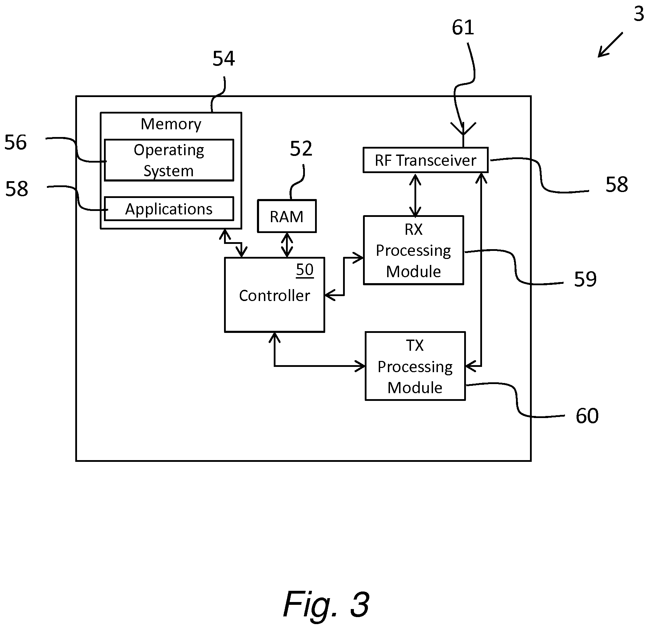

Figure 3 shows a schematic diagram of components of the BS 3. The BS 3 may have a controller 50, RAM 52 and a memory 54. Additionally, the BS 3 may have at least one RF transceiver 58, at least one receiver (RX) processing module 59, at least one transmitter (TX) processing module 60 and at least one RF antenna 61. The controller 50 may be connected to each of the other components as shown in order to control operation thereof.

The memory 54 may be a non-volatile memory such as read only memory (ROM), a hard disk drive (HDD) or a solid state drive (SSD). The memory 54 stores, amongst other things, an operating system 56 and may store software applications 58. In this example, the memory 54 may store a software application for encoding and decoding HARQ feedback messages in association with, respectively, the TX processing module 60 and the RX processing module 59. The RAM 52 is used by the controller 50 for the temporary storage of data. The operating system 56 may contain code which, when executed by the controller 50 in conjunction with the RAM 52, controls operation of each of the hardware components of the BS 3.

The controller 50 may take any suitable form. For instance, it may be a microcontroller, plural microcontrollers, a processor, or plural processors.

In some embodiments, the BS 3 may also be associated with external software applications not stored on the BS. These may be applications stored on a remote server device and may run partly or exclusively on the remote server device. These applications may be termed cloud-hosted applications. The BS 3 may be in communication with the remote server device in order to utilize the software application stored there.

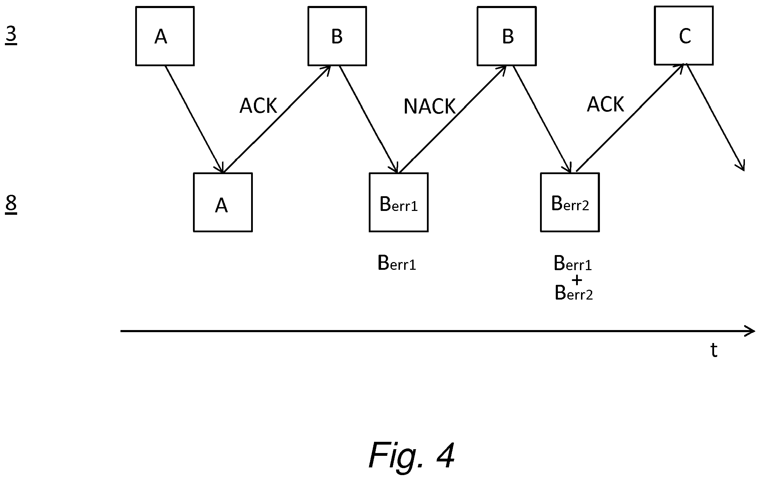

Figure 4 shows in overview the principle behind the HARQ feedback technique which is useful for understanding the embodiments to be described below. For illustration, we will assume the BS 3 is transmitting data packets to the UE 8 (over the downlink 15) but the same principles also apply to the uplink 13.

The UE 8 needs to verify whether or not the packet arrives correctly. The packet may not be correctly received if the channel is of low quality, for example if there is significant RF interference (poor SNR). If the packet is correctly received, the UE 8 may receive and process a new packet. If the packet contains errors, some action is required. As is known, error detection may be performed by adding additional bits to the packet payload, e.g. a cyclic redundancy code (CRC). In some cases, for example where relatively few bits are erroneous, forward error correction (FEC) may be performed. However, where FEC cannot be successfully performed, or is not used, the UE 8 may request that the BS 3 retransmits the packet. In a simple, so-called ARQ technique, the UE 8 may indicate this in an acknowledgment or feedback message to the BS 3. For example, ACK and NACK feedback messages may respectively indicate positive and negative feedback to the BS 3. In response to a NACK feedback message, the BS 3 may retransmit the erroneous packet to the UE 8 until it receives an ACK feedback message. The UE 8 discards the erroneous packets until a retransmitted packet is successfully received. HARQ is an enhanced technique of ARQ that uses so-called 'soft combining' whereby erroneous packets are not discarded. Rather, received erroneous packets, each one with insufficient SNR to permit individual decoding, are stored in a buffer and may be combined. As shown in Figure 4, in an example scenario, a first data packet "A" is successfully received and so the UE 8 generates and transmits an ACK message to the BS 3. However, a subsequent data packet "B" is received with errors (Bern) and so a NACK message is transmitted to the BS 3. The UE 8 stores the Bern packet in a local buffer. Responsive to the NACK message, the BS 3 retransmits data packet "B". If this data packet is also received with errors, i.e. Bₑᵣᵣ₂, an attempt is made at the UE 8 to combine the useful energy of two messages Bₑᵣᵣ₁ and Bₑᵣᵣ₂ to produce the correct packet. If successful, an ACK message is sent from the UE 8 to the BS 3. If not, then another retransmission of data packet "B" is requested using a further NACK message.

A version of the HARQ feedback technique uses so-called incremental redundancy. In this case, each retransmission of a packet contains different information (a redundancy version, or RV) from the previous one until an ACK message is received. In this way, less information is transmitted which may be more efficient than retransmitting the entire packet, provided the packet is successfully decoded in a reasonable time frame.

The systems and methods by which conventional ARQ and HARQ techniques are performed are well known in the art, and so a detailed explanation is not required. In overview, (in the context of the LTE standard) HARQ encoding and decoding is performed at the physical layer. In the downlink, the BS 3 transmits HARQ feedback/acknowledgments on the Physical Hybrid-ARQ Indicator Channel (PHICH). PHICHs are located in the first OFDM symbol of each sub frame. A PHICH is carried by several Resource Element Groups (REGs), and multiple PHICHs may share the same set of REGs, and may be referred to as a PHICH group. In the uplink, the UE 8 transmits HARQ feedback/acknowledgments on the Physical Uplink Control Channel (PUCCH), which is generally used to carry Uplink Control Information (UCI). UCI can also be transmitted on the Physical Uplink Shared Channel (PUSCH).

In the UE 8 shown in Figure 2, the encoding and decoding stages for HARQ are performed in the TX and RX processing modules 40, 39 respectively, possibly in association with one or more software applications 28. Similarly, in the BS 3 shown in Figure 3, the encoding and decoding stages are performed in the TX an RX processing modules 60, 59 respectively, possibly in association with one or more software applications 58.

The above ACK/NACK feedback messages represent so-called Boolean feedback, providing only two conditions, i.e. a positive or negative determination. Embodiments herein provide enriched feedback messages, i.e. containing more information, for example to improve or optimize performance at one or both of the transmitter and/or receiver end. Embodiments herein provide methods and systems for enhanced feedback messages, for example methods of encoding and detecting) such feedback messages.

One example of an enriched feedback method is the use of multi-bit NACK messages for signaling decoder state information (DCI), which informs the transmitter of the amount of additional redundancy needed to decode the erroneous packet. A further example is where a large transport block is segmented into plural code blocks; an enriched feedback message may index the erroneous code blocks, thus avoiding retransmission of the entire transport block. A still further example is the use of a multi-bit ACK message for informing, e.g. the BS 3, to modify its link adaption, for example by adding a positive offset in the Modulation Coding Scheme (MCS) selection in the case of unexpectedly good channel conditions.

In good coverage conditions, an UE 7, 8, 9 may properly detect such enriched feedback messages, and act using said messages. Such UEs 7, 8, 9 may be operating with large transport blocks, meaning that enriched feedback messages offer significant potential. Where conditions are poor (low SNR), for example where one or more UEs 7, 8, 9 are near the boundary of the cell 5, Boolean feedback may be more appropriate where at least the ACK or NACK feedback messages will be detectable. Nevertheless, UEs 7, 8, 9 experiencing good coverage may experience unexpected SNR degradation, due for example to shadowing or bursty interference, which may compromise the ability of correctly decoding multi-bit feedback, leading to unnecessary retransmissions or increased outage probability.

A first embodiment method and system for enhanced feedback will now be described, based on the HARQ methodology.

In overview, a multi-resolution HARQ feedback scheme is proposed, whereby a plurality of so-called classification levels are provided. Each classification level comprises a plurality of classification classes or states, each class or state being representative of a distinct feedback message which can be encoded at one device, e.g. a UE 7, 8, 9 and transmitted to a recipient device, e.g. the BS 3 where it is decoded, and acted on. Multiple classes or states may be encoded and decoded.

For example, at the encoding device, the different states may represent information that will be useful to the decoding device, for example which respective code blocks need to be retransmitted. The more states there are, the more granular the feedback information. In some embodiments, this means that the decoding device can operate in a more efficient way by retransmitting only what is indicated in the feedback message, e.g. specific code blocks or even portions of code blocks, provided the receiving device can decode the appropriate classification level.

In some embodiments, the HARQ classification level to be used at the decoding end is determined based on the quality of the link over which the feedback message is received. The link quality can be any measurable or estimable parameter associated with the feedback link or channel. For example, it may be the estimated SNR of the feedback link. For example, where the feedback message is being transmitted on the uplink 13 from the UE 8 to the BS 3, the SNR may be estimated using the Demodulation Reference Signal (DMRS). Where the feedback message is being transmitted on the downlink 15 from the BS 3 to the EU 8, the SNR may be estimated using one or more pilot signals. The link quality / SNR is indicative of interference at a given time (or over an aggregated period of time) and provides a useful reference as to which classification level, and therefore which state or states, to decode.

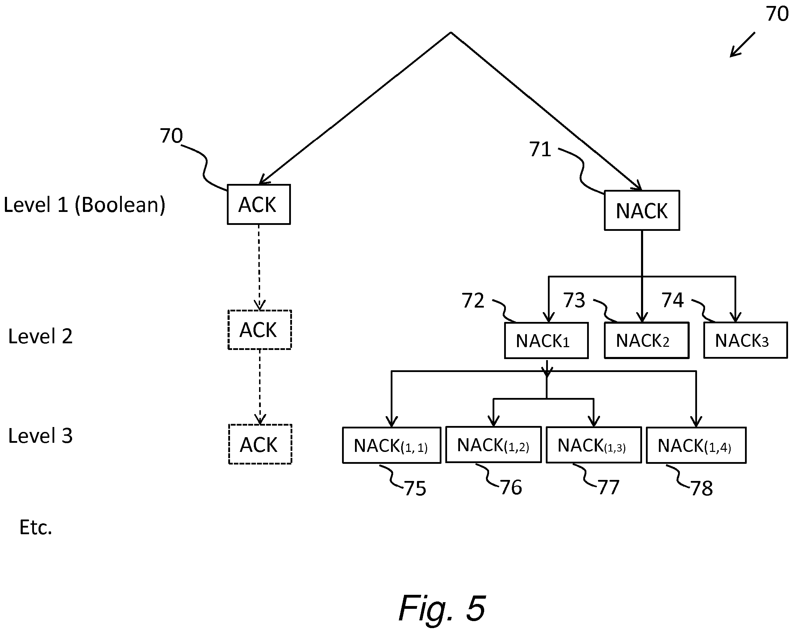

Referring to Figure 5, a first example HARQ classification scheme 70 is partially shown. The HARQ classification scheme 70 comprises three levels. The first level is a Boolean level, with two classification states, i.e. a positive determination ACK 70 and a negative determination NACK 71. The second classification level provides multiple classes, or sub-classes, for at least one of these ACK/NACK states 70, 71. In the shown example, the negative determination NACK 71 has three associated sub-states NACK₁ 72, NACK₂ 73 and NACK₃ 74. The third classification level provides multiple sub-classes for at least one of these sub-states. For example, NACK₁ 72 has four associated sub-states NACK_{(1,1)} 75, NACK_{(1,2)} 76, NACK_{(1,3)} 77 and NACK_{(1,4)} 78. Other states or sub-states may have associated sub-states and further levels may be provided for increased resolution. A resolution state, such as the first level state ACK 70, which is not subdivided, may be carried down to all levels as shown.

Thus, at the encoding device, each of the third level sub-states 75 - 78 may represent a respective code block, or a specific portion of a code block. Additionally, or alternatively, particular states or sub-states may provide alternative data to help the decoding device understand what needs to be retransmitted and/or related data which may be useful at the decoding device.

The principle of operation at the decoding device is that, if the link quality is sufficiently high, then the higher resolution states NACK_{(1,1)} 75, NACK_{(1,2)} 76, NACK_{(1,3)} 77, NACK_{(1,4)} 78, as well as ACK 70, may be detected, decoded and acted on in retransmission. If the link quality is lower, then the second level states NACK₁ 72, NACK₂ 73, NACK₃ 74 and ACK 70 may be detected and decoded. If the link quality is too low, even to allow the second level to be used, then the Boolean level, i.e. ACK 70 or NACK 71, provides a fall back, as it can be detected and decoded in most SNR conditions, albeit with less enhanced information.

Encoding devices may represent each state using a respective multi-bit code. In some embodiments, the multi-bit codes are arranged or designed using unequal distances (e.g. Hamming or Euclidean distances) such that the distance between respective states minimizes the probability of incorrect feedback detection.

In some embodiments states at different levels or at all levels may be transmitted using a same modulation and/or error correction rate.

For example, in some embodiments, the distance between one of the positive and negative states (e.g. ACK 70 and NACK 71) is made significantly larger than the minimum distance among the sub-states of the other (e.g. NACK1 72, NACK2 73 and NACK3 74).

For example, consider the four possible feedback messages in the second level, namely: ACK 70; NACK1 72, NACK2 73 and NACK3 74. These may be coded as follows:

| | |
|---|---|
| ACK | 0000000000 |
| NACK1 | 1101101111 |
| NACK2 | 1011111011 |
| NACK3 | 1110110111. |

The Hamming distance between ACK 70 and each of the NACK states 72 - 74 is eight, whereas the distance between each pair of NACK states is four. This means that if a feedback message is received with up to three bit errors, the ACK state 70 can still be distinguished from the NACK states 72 - 74. However, at most a one bit error may be tolerated for distinguishing between the individual NACK states 72 - 74. In the traditional, one-level Boolean HARQ scheme, ACK is coded with all zeros, and NACK with all ones. This provides a Hamming distance of ten, tolerant of up to four bit errors. With the present example, we enable an expansion of the NACK signaling space with only a marginal impact on the ACK v NACK detection reliability.

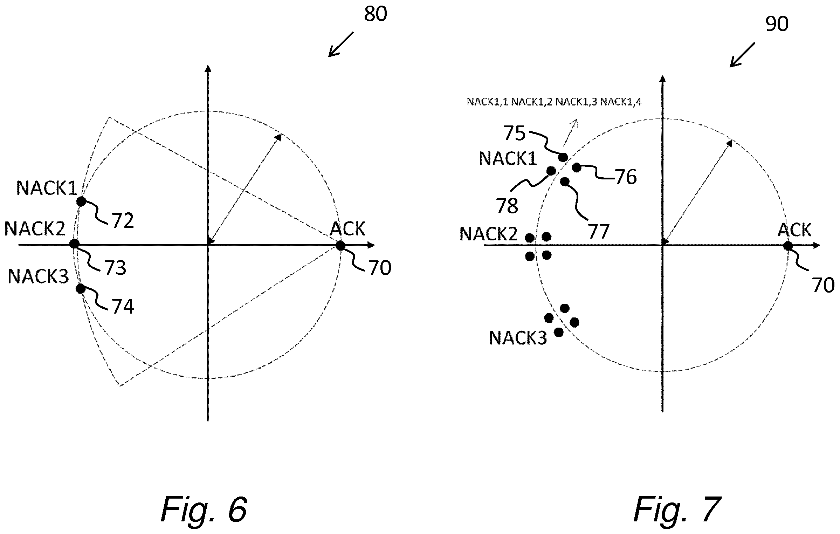

Referring to Figure 6, a constellation diagram 80 is shown, representing the second level coding scheme in Euclidean space. If the feedback message is received with a poor SNR, the constellation points (states) for NACK1 72, NACK2 73 and NACK3 74 on the left hand side may not be distinguishable from one another, although a safe distance is maintained from the ACK 70. In some embodiments, an optimization method may be applied to structure the distances shown in Figure 6 to avoid misdetection between two or more critical states. For example, if it is critical to avoid detecting or decoding NACK1 72 as NACK3 74, then the distance between these two states should be greater than, say, the distance between NACK2 and one of the other NACK states.

Referring to Figure 7, a constellation diagram 90 is shown, representing the third level coding scheme in Euclidian space. Each of the second level states NACK1 72, NACK2 73 and NACK3 74 has four sub states, although only the sub states NACK_{(1,1)} 75, NACK_{(1,2)} 76, NACK_{(1,3)} 77, NACK_{(1,4)} 78 are indicated for convenience. Overall, therefore, there are twelve NACK states and the ACK state 70, providing an enhanced method of NACK feedback though greater resolution.

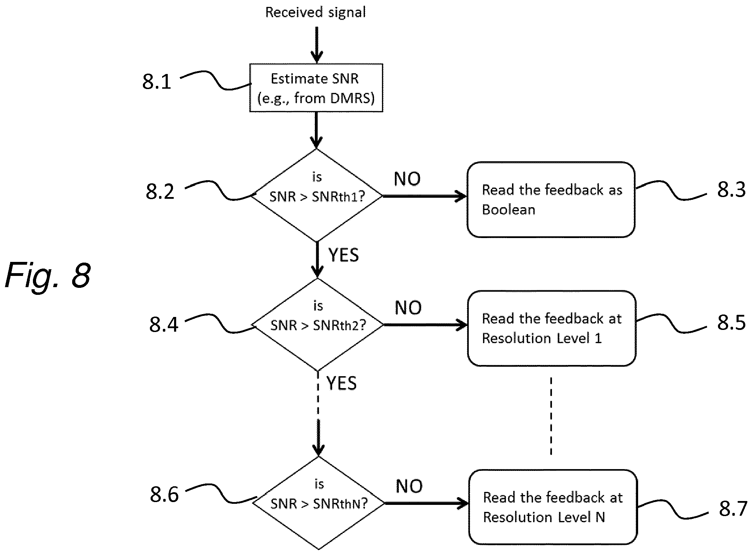

Referring to Figure 8, a flow chart is shown depicting aspects of detecting and decoding of the feedback message according to the first embodiment. For example, we will assume that the BS 3 is receiving feedback messages from the UE 8 responsive to transmitting payload data to said UE.

At 8.1, the quality of the uplink 13 is measured, using for example DMRS, to provide an estimate of SNR. At 8.2, it is determined if the SNR is greater than a first threshold SNRₜₕ₁. If not, then at 8.3 the first classification level is selected and the feedback message is decoded as either ACK or NACK, i.e. Boolean. If the SNR is greater than SNRₜₕ₁, then at 8.4 it is determined if the SNR is greater than a second threshold SNRₜₕ₂. If not, then at 8.5 the second classification level is selected and the feedback message is detected and decoded according to the constellation 80 shown in Figure 6. If the SNR is greater than SNRₜₕ₂, then at 8.6 the third classification level is selected and the feedback message is detected and decoded at 8.7 according to the constellation 90 shown in Figure 7.

It will be appreciated from Figure 8 that there may be further levels providing an even greater resolution, and hence thresholds. It will also be appreciated that the same general operation may be performed at the UE 8 when receiving feedback messages from the BS 3, and indeed any device using the enhanced HARQ scheme. In addition, any other channel quality metric, such as for example SINR, RSRP, RSRQ, RSSI, or combination of channel quality metrics may be used instead of SNR and may be compared to appropriate thresholds.

In some embodiments, two or more classification levels may be associated with the positive determination (ACK) instead of, or in addition to, the classification levels associated with the negative determination (NACK.)

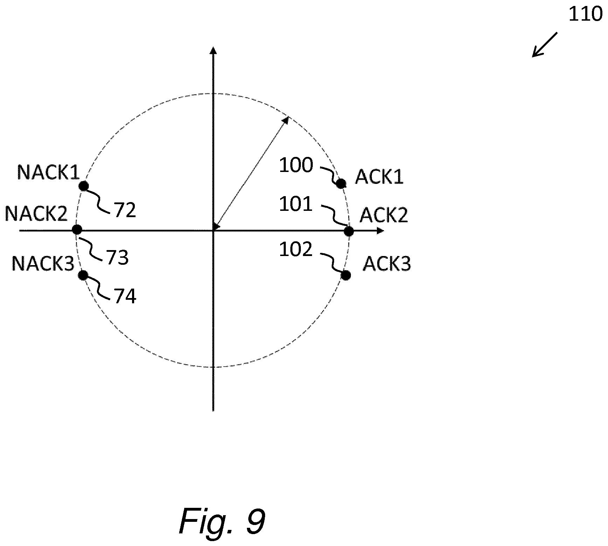

For example, Figure 9 is a constellation diagram no similar to that shown in Figure 6, wherein a second classification level is provided in relation to the ACK state 70 to provide three sub states ACK1 100, ACK2 101 and ACK3 102. Similar to the first embodiment, each state may be represented by a multi-bit code with unequal distances to mitigate erroneous detecting and decoding of the feedback message. This may result in a small reduction of the minimum distance between the ACK/NACK states, but offers the advantage of indicating further information on how the link may be adapted in one or more subsequent transmissions. The distance between the states, as well as the message that each state represents, may be optimised according to the likelihood of each message, and the channel or link quality that the message is more relevant to. For example, a link quality that is better than expected by the transmitting device is more likely to trigger an ACK message with link-adaptation modification. This may involve setting a positive offset in the MCS selection. Therefore, choosing among the available ACK states, the transmitting device may use the least error-resistant state in good link conditions (high SNR) so as to convey the ACK state in the feedback message. Additionally, or alternatively, the ACK state that is most resistant from being decoded as a NACK (i.e. having the maximum Euclidean distance) may be selected as the ACK state in minimally good channel conditions, i.e. similar to what was estimated during MCS selection. In the case of the Figure 9 constellation diagram no, the most robust ACK state will be ACK2 101, whereas ACK1 100 and ACK3 102 are more prone to misdetection due to the lower distance from the NACK states 72, 73,74.

Constellation-based approaches, such as the above, may be used where coherent detection for the feedback message is possible at the receiver device. In general, multi-resolution feedback boosts the reliability of the Boolean feedback, at the expense of a lower reliability in the enriched information provided in the first, and any subsequent, levels.

In some embodiments, the BS 3 may select multi-resolution feedback in the case of a poor average SNR condition. As before, the first level (Boolean) classes may always be detected, whereas the enriched parts can be opportunistically detected in case of an instantaneous SNR improvement.

In some embodiments, the BS 3 may select multi-resolution feedback if a certain variance in the SNR is estimated, while initially relying on a traditional multi-bit feedback approach with equal distance in the case of stable SNR conditions, and/or Boolean feedback.

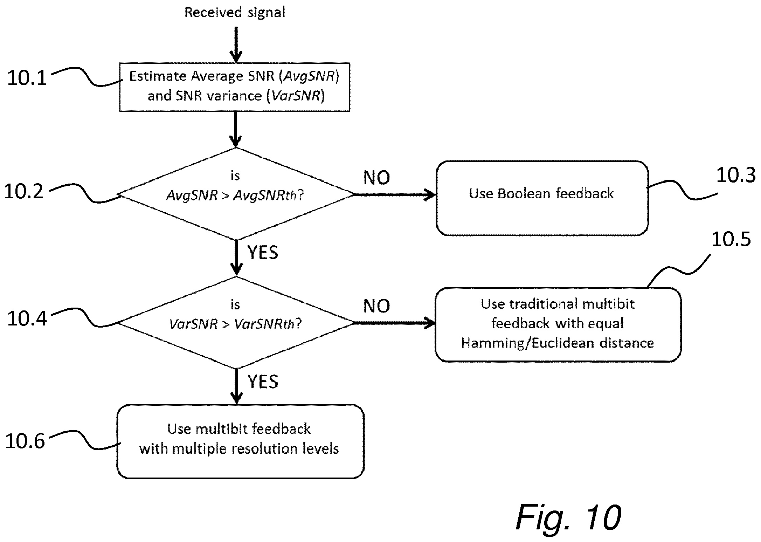

Referring to Figure 10, a flow chart is shown depicting aspects of detection and decoding of the feedback message according to a further embodiment. At 10.1, the average SNR (AvgSNR) and the SNR variance (VarSNR) is estimated. Subsequently, at 10.2, it is determined if the average SNR is greater than a first threshold AvgSNRth. If not, then the first level states (Boolean) are used at 10.3. If the average SNR is greater than the first threshold, then at 10.4 it is determined if the SNR variance is greater than a different threshold VarSNRth. If not, then at 10.5, a traditional multi-bit feedback message with equal distance (Hamming or Euclidian) is used. If the SNR variance is greater than the threshold, then at 10.6 the multi-bit feedback, with multiple resolution levels is employed, as described above. The multi-resolution feedback may therefore be enabled when the average SNR is estimated to be sufficiently high, but is unstable, e.g., due to bursty interference. In case of a high and stable SNR, the device may use traditional multi-bit feedback. As mentioned above, the use of SNR as quality metric is exemplary and should be understood to be replaceable by other link quality metrics or combination of link quality metrics.

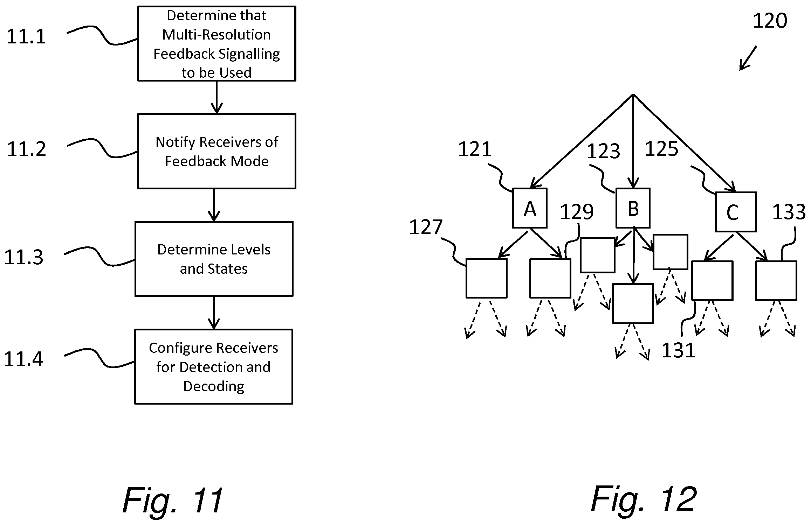

At the encoding end for transmitting multi-resolution feedback messages, the form of message, i.e. the number of main classes, the number of levels and number and arrangement of sub-classes within each level may be performed manually or automatically. Figure 11 is a flow diagram showing processing that may be performed by an application executed at the encoding end. At 11.1, the encoder determines that multi-resolution signalling is to be used (for example, in place of the current conventional HARQ scheme). The decision to choose multi-resolution signalling may, for example, be based on channel conditions and/or a configuration received from the receiver. Additionally, or alternatively, the decision may be based on a receiver capability received from the receiver. Additionally, or alternatively, the decision may be based on the availability of indications to be carried on higher than the first level. At 11.2, the encoding end may notify one or more receivers that it is switching to the multi-resolution mode. At 11.3, the number of levels and states is determined for the feedback scheme. At 11.4, optionally, further data may be transmitted to the one or more receivers to configure them to detect and decode future multi-resolution feedback messages. It will be appreciated that the processing sequence may be modified.

Referring to Figure 12, in some embodiments, the encoding and decoding ends may use a multi-resolution scheme 120 that comprises more than two main states, for example first, second and third main states 121, 123, 125 as shown. Each main state 121, 123, 125 may have a different number of sub-states as shown. There may be different numbers of levels for the main states 121, 123, 125. Some of the sub-states may have the same interpretation. For example, the sub-states 127 and 131 may contain the same message and sub-states 129 and 133 may contain the same message. Each sub-state may have different threshold levels for deciding whether or not to decode the sub-state, and the actual decoding of the sub-state.

As mentioned, the described multi-resolution technique is applicable to any feedback or acknowledgment method for creating separation or polarisation between states that contain information requiring separation.

In some embodiments, the transmitting device may transmit the multi-bit message without considering SNR or any channel condition for selecting the level.

In some embodiments, the threshold(s) for determining the classification level may be determined autonomously.

In some embodiments, the receiving device may detect and decode the feedback message based on blind observation, without estimating the SNR. For example, the receiving device may consider the similarity of the received data to expected code words of the received signal or sequence.

In some embodiments, channel quality thresholds for selecting the level used at the transmitter may be different (for example more strict) than channel quality thresholds used at the receiver. The transmitter may receive an indication of which thresholds or threshold values or levels to apply from the receiver.

In general, it may be foreseen that a mismatch may occur between the level applied at the transmitter and the level applied at the decoder of the receiver. Advantageously, when the level at the transmitter is higher than at the decoder, the decoder may successfully extract information which is common to, or at a larger granularity than, the transmitter. For example, referring to Figures 5 to 7, a transmitter may transmit at level three, NACK1,4 78, where the receiver, for example due to inadequate SNR, decodes at level two, the nearest point NACK1 72. While the more detailed information carried in NACK1,4 78 is lost, the common or larger granularity information may be considered successfully received. For example, NACK1 72 may indicate that a group of two transmission blocks is not successfully received, where NACK1,4 78 may have indicated, at a higher granularity, which specific block(s) within the group were not successfully received. The receiver, responsive to decoding NACK1 72, may then retransmit the group of two transmission blocks rather than retransmitting the specific block(s) within the group that were not successfully received.

Advantageously, when the level at the transmitter is lower than at the decoder, the decoder will generally have adequate signal quality to distinguish between the transmission points allowing it to determine that no good match (for example too high a distance) exists between any of the nearest points at the decoding level and the received feedback message. The decoder may then, either based on recursively re-attempting the decoding at a lower level, or based on known relationships between the codepoints at different levels, derive the correct codepoint at the lower level. For example, referring to Figures 5 to 7, a transmitter may transmit at level two, NACK1 72, where the receiver, for example due to higher estimated SNR, decodes at level 3, and determines the distance to at least the nearest point NACK1,4 77. The receiver may conclude based on the distance to re-decode at level two, or may conclude based on the distance and the nearest point at level two, that the correct feedback must have been NACK1 72 at level two.

In some other embodiments, the decoder may establish the distance between the received feedback messages and codepoints at multiple levels and decide based on the distance both the transmitted codepoint and the level.

It will be appreciated that the above described embodiments are purely illustrative and are not limiting on the scope of the invention. Other variations and modifications will be apparent to persons skilled in the art upon reading the present application.

The scope of the invention is defined in the appended claims.

## Claims

1. A first device comprising at least one processor and at least one memory with computer-readable code stored thereon which, when executed, controls the at least one processor to cause the first device at least to perform:
receiving at the first device (8, 3) a feedback signal over a wireless link from a second, remote device (3, 8), the feedback signal representing at least either a positive or negative determination in relation to a first signal previously transmitted by the first device to the second device (3, 8);
providing a Signal to Noise Ratio SNR estimate of the wireless link by measuring a quality of the wireless link;
selecting one of a plurality of feedback classification levels based at least on the Signal to Noise Ratio estimate, the selecting comprising:
determining whether the Signal to Noise Ratio estimate is greater than a first threshold, and if not, selecting a first classification level;
when the Signal to Noise Ratio is greater than the first threshold, determining whether the Signal to Noise Ratio estimate is greater than a second threshold, and if not, selecting a second classification level;
and when the Signal to Noise Ratio estimate is greater than the second threshold, selecting a third classification level,
wherein the third threshold is greater than the second threshold and the second threshold is greater than the first threshold;
and
detecting and decoding the feedback signal according to a constellation corresponding to the selected feedback classification level; wherein:
the first classification level corresponds to a Boolean level constellation with two feedback states (70, 71) indicative of a positive or negative acknowledgement;
the second classification level corresponds to a constellation (80) built upon the constellation corresponding to the first classification level and additionally providing multiple feedback states (72, 73, 74) for at least one of the two feedback states (70, 71) of the first classification level; and
the third classification level corresponds to a constellation (90) built upon the constellation corresponding to the second classification level (80) and additionally providing multiple feedback states (75, 76, 77, 78) for at least one of the multiple feedback states (72, 73, 74) of the second classification level.

2. A method performed by a first device, the method comprising:
receiving at the first device (8, 3) a feedback signal over a wireless link from a second, remote device (3, 8), the feedback signal representing at least either a positive or negative determination in relation to a first signal previously transmitted by the first device to the second device (3, 8);
providing a Signal to Noise Ratio SNR estimate of the wireless link by measuring a quality of the wireless link;
selecting one of a plurality of feedback classification levels based at least on the Signal to Noise Ratio estimate, the selecting comprising:
determining whether the Signal to Noise Ratio estimate is greater than a first threshold, and if not, selecting a first classification level;
when the Signal to Noise Ratio is greater than the first threshold, determining whether the Signal to Noise Ratio estimate is greater than a second threshold, and if not, selecting a second classification level;
and when the Signal to Noise Ratio estimate is greater than the second threshold, selecting a third classification level,
wherein the third threshold is greater than the second threshold and the second threshold is greater than the first threshold;
and
detecting and decoding the feedback signal according to a constellation corresponding to the selected feedback classification level; wherein:
the first classification level corresponds to a Boolean level constellation with two feedback states (70, 71) indicative of a positive or negative acknowledgement;
the second classification level corresponds to a constellation (80) built upon the constellation corresponding to the first classification level and additionally providing multiple feedback states (72, 73, 74) for at least one of the two feedback states (70, 71) of the first classification level; and
the third classification level corresponds to a constellation (90) built upon the constellation corresponding to the second classification level (80) and additionally providing multiple feedback states (75, 76, 77, 78) for at least one of the multiple feedback states (72, 73, 74) of the second classification level.

3. A computer program product containing instructions which, when executed on a computer, cause the computer to perform the method of claim 2.

## Patentansprüche

1. Erste Vorrichtung, die mindestens einen Prozessor und mindestens einen Speicher, in dem computerlesbarer Code gespeichert ist, umfasst, der, wenn er ausgeführt wird, den mindestens einen Prozessor steuert, um die erste Vorrichtung zu veranlassen, mindestens Folgendes durchzuführen:
Empfangen eines Rückmeldesignals an der ersten Vorrichtung (8, 3) über eine drahtlose Verbindung von einer zweiten entfernten Vorrichtung (3, 8), wobei das Rückmeldesignal entweder eine positive oder eine negative Bestimmung mit Bezug auf ein erstes Signal repräsentiert, das zuvor von der ersten Vorrichtung zur zweiten Vorrichtung (3, 8) übertragen wurde;
Bereitstellen einer Signal-zu-Rauschen-Verhältnis(SNR)-Schätzung der drahtlosen Verbindung durch Messen einer Qualität der drahtlosen Verbindung;
Auswählen von einem einer Vielzahl von Rückmeldungsklassifizierungsniveaus mindestens auf Basis der Signal-zu-Rauschen-Verhältnis-Schätzung, wobei das Auswählen Folgendes umfasst:
Bestimmen, ob die Signal-zu-Rauschen-Verhältnis-Schätzung größer ist als ein erster Schwellwert, und wenn nicht, Auswählen eines ersten Klassifizierungsniveaus;
wenn das Signal-zu-Rauschen-Verhältnis größer ist als ein erster Schwellwert, Bestimmen, ob die Signal-zu-Rauschen-Verhältnis-Schätzung größer ist als ein zweiter Schwellwert, und wenn nicht, Auswählen eines zweiten Klassifizierungsniveaus;
und wenn die Signal-zu-Rauschen-Verhältnis-Schätzung größer ist als der zweite Schwellwert Auswählen eines dritten Klassifizierungsniveaus,
wobei der dritte Schwellwert größer ist als der zweite Schwellwert und der zweite Schwellwert größer ist als der erste Schwellwert;
und
Detektieren und Decodieren des Rückmeldesignals gemäß einer Konstellation, die dem ausgewählten Rückmeldungsklassifizierungsniveau entspricht; wobei:
das erste Klassifizierungsniveau einer Konstellation auf boolescher Ebene mit zwei Rückmeldungszuständen (70, 71) entspricht, die eine positive oder eine negative Bestätigung anzeigen;
das zweite Klassifizierungsniveau einer Konstellation (80) entspricht, die auf die Konstellation aufgebaut ist, die dem ersten Klassifizierungsniveau entspricht, und zusätzlich mehrere Rückmeldungszustände (72, 73, 74) für mindestens einen der zwei Rückmeldungszustände (70, 71) des ersten Klassifizierungsniveau bereitstellt; und
das dritte Klassifizierungsniveau einer Konstellation (90) entspricht, die auf die Konstellation aufgebaut ist, die dem zweiten Klassifizierungsniveau (80) entspricht, und zusätzlich mehrere Rückmeldungszustände (75, 76, 77, 78) für mindestens einen der mehreren Rückmeldungszustände (72, 73, 74) des zweiten Klassifizierungsniveau bereitstellt.

2. Verfahren das von einer ersten Vorrichtung durchgeführt wird, wobei das Verfahren Folgendes umfasst:
Empfangen eines Rückmeldesignals an der ersten Vorrichtung (8, 3) über eine drahtlose Verbindung von einer zweiten entfernten Vorrichtung (3, 8), wobei das Rückmeldesignal entweder eine positive oder eine negative Bestimmung mit Bezug auf ein erstes Signal repräsentiert, das zuvor von der ersten Vorrichtung zur zweiten Vorrichtung (3, 8) übertragen wurde;
Bereitstellen einer Signal-zu-Rauschen-Verhältnis(SNR)-Schätzung der drahtlosen Verbindung durch Messen einer Qualität der drahtlosen Verbindung;
Auswählen von einem einer Vielzahl von Rückmeldungsklassifizierungsniveaus mindestens auf Basis der Signal-zu-Rauschen-Verhältnis-Schätzung, wobei das Auswählen Folgendes umfasst:
Bestimmen, ob die Signal-zu-Rauschen-Verhältnis-Schätzung größer ist als ein erster Schwellwert, und wenn nicht, Auswählen eines ersten Klassifizierungsniveaus;
wenn das Signal-zu-Rauschen-Verhältnis größer ist als ein erster Schwellwert, Bestimmen, ob die Signal-zu-Rauschen-Verhältnis-Schätzung größer ist als ein zweiter Schwellwert, und wenn nicht, Auswählen eines zweiten Klassifizierungsniveaus;
und wenn die Signal-zu-Rauschen-Verhältnis-Schätzung größer ist als der zweite Schwellwert Auswählen eines dritten Klassifizierungsniveaus,
wobei der dritte Schwellwert größer ist als der zweite Schwellwert und der zweite Schwellwert größer ist als der erste Schwellwert;
und
Detektieren und Decodieren des Rückmeldesignals gemäß einer Konstellation, die dem ausgewählten Rückmeldungsklassifizierungsniveau entspricht, wobei:
das erste Klassifizierungsniveau einer Konstellation auf boolescher Ebene mit zwei Rückmeldungszuständen (70, 71) entspricht, die eine positive oder eine negative Bestätigung anzeigen;
das zweite Klassifizierungsniveau einer Konstellation (80) entspricht, die auf die Konstellation aufgebaut ist, die dem ersten Klassifizierungsniveau entspricht, und zusätzlich mehrere Rückmeldungszustände (72, 73, 74) für mindestens einen der zwei Rückmeldungszustände (70, 71) des ersten Klassifizierungsniveau bereitstellt; und
das dritte Klassifizierungsniveau einer Konstellation (90) entspricht, die auf die Konstellation aufgebaut ist, die dem zweiten Klassifizierungsniveau (80) entspricht, und zusätzlich mehrere Rückmeldungszustände (75, 76, 77, 78) für mindestens einen der mehreren Rückmeldungszustände (72, 73, 74) des zweiten Klassifizierungsniveau bereitstellt.

3. Computerprogrammprodukt, das Anweisungen enthält, die, wenn sie auf einem Computer ausgeführt werden, den Computer veranlassen, das Verfahren nach Anspruch 2 durchzuführen.

## Revendications

1. Premier dispositif comprenant au moins un processeur et au moins une mémoire dans laquelle est stocké un code lisible par ordinateur qui, lorsqu'il est exécuté, commande l'au moins un processeur pour amener le premier dispositif à réaliser au moins ce qui suit :
recevoir un signal de rétroaction sur le premier dispositif (8, 3), sur une liaison sans fil, en provenance d'un deuxième dispositif (3, 8) distant, le signal de rétroaction représentant au moins une détermination soit positive soit négative par rapport à un premier signal précédemment transmis au deuxième dispositif (3, 8) par le premier dispositif ;
fournir une estimation de rapport signal/bruit, SNR, de la liaison sans fil en mesurant la qualité de la liaison sans fil ;
sélectionner l'un d'une pluralité de niveaux de classification de rétroaction, en se basant au moins sur l'estimation de rapport signal/bruit, la sélection comprenant ce qui suit :
déterminer si l'estimation de rapport signal/bruit est supérieure à un premier seuil, et dans la négative, sélectionner un premier niveau de classification ;
dans le cas où le rapport signal/bruit est supérieur au premier seuil, déterminer si l'estimation de rapport signal/bruit est supérieure à un deuxième seuil, et dans la négative, sélectionner un deuxième niveau de classification ;
et dans le cas où l'estimation de rapport signal/bruit est supérieure au deuxième seuil, sélectionner un troisième niveau de classification,
dans lequel le troisième seuil est supérieur au deuxième seuil et le deuxième seuil est supérieur au premier seuil ; et
détecter et décoder le signal de rétroaction selon une constellation correspondant au niveau de classification de rétroaction sélectionné ; dans lequel :
le premier niveau de classification correspond à une constellation de niveaux booléens avec deux états de rétroaction (70, 71) indiquant un accusé de réception positif ou négatif ;
le deuxième niveau de classification correspond à une constellation (80) construite à partir de la constellation correspondant au premier niveau de classification et fournissant en outre de multiples états de rétroaction (72, 73, 74) pour au moins l'un des deux états de rétroaction (70, 71) du premier niveau de classification ; et
le troisième niveau de classification correspond à une constellation (90) construite à partir de la constellation correspondant au deuxième niveau de classification (80) et fournissant en outre de multiples états de rétroaction (75, 76, 77, 78) pour au moins un des multiples états de rétroaction (72, 73, 74) du deuxième niveau de classification.

2. Procédé réalisé par un premier dispositif, le procédé comprenant les étapes suivantes :
recevoir un signal de rétroaction sur le premier dispositif (8, 3), sur une liaison sans fil, en provenance d'un deuxième dispositif (3, 8) distant, le signal de rétroaction représentant au moins une détermination soit positive soit négative par rapport à un premier signal précédemment transmis au deuxième dispositif (3, 8) par le premier dispositif ;
fournir une estimation de rapport signal/bruit, SNR, de la liaison sans fil en mesurant la qualité de la liaison sans fil ;
sélectionner l'un d'une pluralité de niveaux de classification de rétroaction, en se basant au moins sur l'estimation de rapport signal/bruit, la sélection comprenant ce qui suit :
déterminer si l'estimation de rapport signal/bruit est supérieure à un premier seuil, et dans la négative, sélectionner un premier niveau de classification ;
dans le cas où le rapport signal/bruit est supérieur au premier seuil, déterminer si l'estimation de rapport signal/bruit est supérieure à un deuxième seuil, et dans la négative, sélectionner un deuxième niveau de classification ;
et dans le cas où l'estimation de rapport signal/bruit est supérieure au deuxième seuil, sélectionner un troisième niveau de classification,
dans lequel le troisième seuil est supérieur au deuxième seuil et le deuxième seuil est supérieur au premier seuil ; et
détecter et décoder le signal de rétroaction selon une constellation correspondant au niveau de classification de rétroaction sélectionné ; dans lequel :
le premier niveau de classification correspond à une constellation de niveaux booléens avec deux états de rétroaction (70, 71) indiquant un accusé de réception positif ou négatif ;
le deuxième niveau de classification correspond à une constellation (80) construite à partir de la constellation correspondant au premier niveau de classification et fournissant en outre de multiples états de rétroaction (72, 73, 74) pour au moins l'un des deux états de rétroaction (70, 71) du premier niveau de classification ; et
le troisième niveau de classification correspond à une constellation (90) construite à partir de la constellation correspondant au deuxième niveau de classification (80) et fournissant en outre de multiples états de rétroaction (75, 76, 77, 78) pour au moins un des multiples états de rétroaction (72, 73, 74) du deuxième niveau de classification.

3. Produit de programme informatique contenant des instructions qui, lorsqu'elles sont exécutées sur un ordinateur, amènent l'ordinateur à réaliser le procédé de la revendication 2.
